# EUROPEAN PATENT APPLICATION

(11) **EP 3 104 592 A1**
(43) Date of publication of application: **14.12.2016**
(21) Application number: 15181843.2
(22) Date of filing: 20.08.2015
(51) Int. Cl.: H04N 5/232

(54) **METHOD FOR PROVIDING USER INTERFACE IN USER TERMINAL INCLUDING CAMERA**

(30) Priority: 08.06.2015 KR 20150080645
(71) Applicant: Rim, Jin Wook, Seoul 06547 (KR)
(72) Inventor: Rim, Jin Wook, Seoul 06547 (KR)
(74) Representative: V.O.

(57) **Abstract**

A user interface providing method in a user terminal including a camera is provided which includes providing a user interface including a viewfinder object displaying an image which the camera takes, to a display unit of the user terminal, selecting one of corners of the user interface based on orientation information obtained from a gravity sensor included in the user terminal, and displaying the photographing object for controlling a shooting operation of the camera around the selected corner.

## Description

### CROSS-REFERENCE TO RELATED APPLICATIONS

A claim for priority under 35 U.S.C. § 119 is made to Korean Patent Application No. 10-2015-0080645 filed June 08, 2015, in the Korean Intellectual Property Office, the entire contents of which are hereby incorporated by reference.

### BACKGROUND

Embodiments of the inventive concepts relate to a method for providing a user interface at a user terminal including a camera, and more specifically, to a method for displaying a photographing object (e.g. a shutter button), which is used to control a photographing operation of the camera included in the user terminal, around one of corners of the user interface.

A user interface provided in a conventional user interface may display a photographing object on a center bottom end portion of the user interface

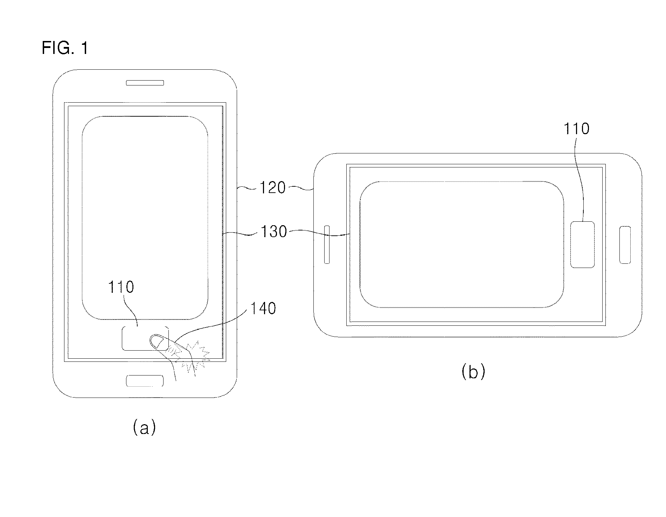

For example, referring to FIG. 1 which illustrates a conventional user interface, a photographing object 110 as a shutter button may be displayed at a center bottom end portion on the user interface 130 provided in a display unit of a user terminal 120.

Generally, since a user of the user terminal 120 touches the photographing object 110 using a thumb 140 (or an index finger), the user may severely bend the thumb 140 (or the index finger) to touch the photographing object 110 using the thumb 140 (or the index finger) as illustrated in FIG. 1A.

In addition, as illustrated in FIG. 1B, the photographing object 110 is fixedly displayed in the center region of the bottom end portion of the user interface 130 without considering the case that the user terminal 120 rotates for use, thereby reducing user convenience.

Especially, when a user touches the photographing object 110 to take an image using the user terminal 120, a camera may be covered by the user's hand depending on the user's hand size and appearance, a size of the user terminal, a position (lens position) of the camera included in the user terminal 120, and the like.

Therefore, the following embodiments may provide technologies for adaptively displaying the photographing object on the user interface based on the user's hand size and appearance, a size of the user terminal, a position (lens position) of the camera included in the user terminal, and the like and changing a position of a photographing object which is displayed.

### SUMMARY

Embodiments of the inventive concepts provide a user interface providing method and a user terminal including the same, capable of selecting one of corners of a user interface based on orientation information of a user terminal obtained from a gravity sensor of the user terminal and displaying a photographing object around the selected corner, thereby improving user convenience.

In addition, embodiments of the inventive concept provide a user interface providing method and a user terminal including the same, capable of storing and maintaining information associated with a position at which a photographing object is displayed, thereby making it possible to select one of the corners of a user interface based on information related to a position of the time when a photographing object was previously displayed and display a photographing object around the selected corner.

In addition, embodiments of the inventive concept provide a user interface providing method and a user terminal including the same, capable of selecting any one of the corners of a user interface based on a position selection input of the user on the photographing object and displaying the photographing object around the selected corner.

In addition, embodiments of the inventive concept provide a user interface providing method and a user terminal including the same, capable of changing the position in which the photographing object is displayed, in response to a position change input of a user changing a position of a displayed photographing object.

An embodiment of the inventive concept provides a user interface providing method in a user terminal including a camera. The user interface providing method includes providing a user interface including a viewfinder object displaying an image which the camera takes, to a display unit of the user terminal, selecting one of corners of the user interface based on orientation information obtained from a gravity sensor included in the user terminal, and displaying the photographing object for controlling a shooting operation of the camera around the selected corner.

The selecting may include selecting one of the corners of the user interface based on information related to a position when a photographing object is previously displayed.

The displaying may include storing and maintaining information related to a position of the displayed photographing object after the photographing object is displayed.

The selecting of one of corners of the user interface may include selecting one of the corners of the user interface based on a position selection input of a user on the photographing object.

The selecting of one of corners of the user interface may further include displaying a position selection input object for receiving a position selection input of the user on the photographing object, on the user interface.

The displaying may include changing a position of the displayed photographing object in response to receive a position change input of a user for changing the position of the displayed photographing object.

The changing comprises at least one of receiving a position selection input of the user on a displayed position selection input object on the user interface, or receiving a drag input of the user for changing the position of the displayed photographing object.

An embodiment of the inventive concept provides a user interface providing method in a user terminal including a camera. The user interface providing method includes providing a user interface including a viewfinder object displaying an image which the camera takes, to a display unit of the user terminal, displaying a photographing object for controlling a photographing operation of the camera through the user interface, receiving a position change input of a user for changing a position of the displayed photographing object, and changing the position of the displayed photographing object based on the position change input of the user.

The user interface providing method may further include determining the position of the photographing object based on information related to a position when the photographing object is previously displayed.

The receiving may include at least one of receiving a position selection input of the user on a displayed position selection input object, or receiving a drag input of a user for changing the position of the displayed photographing object.

### BRIEF DESCRIPTION OF THE FIGURES

The above and other objects and features will become apparent from the following description with reference to the following figures, wherein like reference numerals refer to like parts throughout the various figures unless otherwise specified, and wherein:
FIG. 1 is a diagram illustrating a conventional user interface provided in a user terminal;
FIG. 2 is a diagram illustrating a user interface configured to display a photographing object according to an embodiment of the inventive concept;
FIG. 3 is a diagram illustrating a user interface configured to display a photographing object according to other embodiment of the inventive concept;
FIG. 4 is a diagram illustrating a user interface where a photographing object is displayed, according to another embodiment of the inventive concept;
FIG. 5 is a diagram illustrating a user interface where a position of a displayed photographing object is changed, according to an embodiment of the inventive concept;
FIG. 6 is a diagram illustrating a user interface where a position of a displayed photographing object is changed, according to other embodiment of the inventive concept;
FIG. 7 is a flow chart illustrating a user interface providing method according to an embodiment of the inventive concept; and
FIG. 8 is a block diagram illustrating a user terminal operating through a user interface according to an embodiment of the inventive concept.

### DETAILED DESCRIPTION

Embodiments will be described in detail with reference to the accompanying drawings. The inventive concept, however, may be embodied in various different forms, and should not be construed as being limited only to the illustrated embodiments. Rather, these embodiments are provided as examples so that this disclosure will be thorough and complete, and will fully convey the concept of the inventive concept to those skilled in the art. Accordingly, known processes, elements, and techniques are not described with respect to some of the embodiments of the inventive concept. Unless otherwise noted, like reference numerals denote like elements throughout the attached drawings and written description, and thus descriptions will not be repeated. In the drawings, the sizes and relative sizes of layers and regions may be exaggerated for clarity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the inventive concept.

Spatially relative terms, such as "beneath", "below", "lower", "under", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" or "under" other elements or features would then be oriented "above" the other elements or features. Thus, the exemplary terms "below" and "under" can encompass both an orientation of above and below. The device may be otherwise oriented (rotated 90 degrees or at other orientations) and the spatially relative descriptors used herein interpreted accordingly. In addition, it will also be understood that when a layer is referred to as being "between" two layers, it can be the only layer between the two layers, or one or more intervening layers may also be present.

The terminology used herein is for the purpose of describing particular embodiments only and is not intended to be limiting of the inventive concept. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Also, the term "exemplary" is intended to refer to an example or illustration.

It will be understood that when an element or layer is referred to as being "on", "connected to", "coupled to", or "adjacent to" another element or layer, it can be directly on, connected, coupled, or adjacent to the other element or layer, or intervening elements or layers may be present. In contrast, when an element is referred to as being "directly on," "directly connected to", "directly coupled to", or "immediately adjacent to" another element or layer, there are no intervening elements or layers present.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and/or the present specification and will not be interpreted in an idealized or overly formal sense unless expressly so defined herein.

In the description below, it will be understood that when an element such as a layer, region, substrate, plate, or member is referred to as being "on" another element, it can be directly on the other element or intervening elements may be present. In contrast, the term "directly" means that there are no intervening elements.

Below, embodiments of the inventive concept may be described in detail with reference to accompanying drawings. However, the scope and spirit of the inventive concept may not be limited thereto. In addition, the same reference numerals in the drawings denote like elements.

Furthermore, terminologies used herein to appropriately describe an embodiment of the inventive concept may vary according to intention of a user, a convention practice in the art, or the like. Accordingly, definition of the terms may be made according to contents throughout the present specification.

Below, a user interface providing method of a user terminal may be performed by a control unit included in the user terminal. Accordingly, a user interface described hereinafter may be provided in a display unit of the user terminal based on an operation of the control unit included in the control unit.

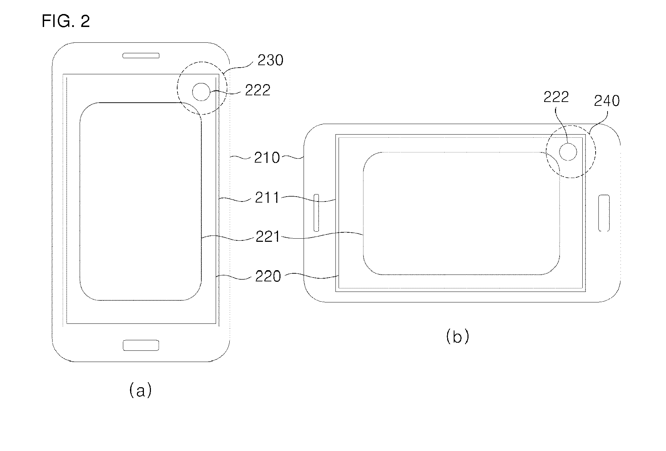

FIG. 2 is a diagram illustrating a user interface in which a photographing object is displayed.

Referring to FIG. 2, a control unit (not illustrated) included in a user terminal 210 according to an embodiment of the inventive concept may provide a user interface 220 to a display unit 211 of the user terminal 210. In this case, the user interface 220 may include a viewfinder object 221 displaying an image which a camera (not illustrated) included in the user terminal 210 takes. In FIG. 2, the viewfinder object 221 may be displayed on a portion of the user interface 220. However, the scope and spirit of the inventive concept may not be limited thereto. For example, the viewfinder object 221 may be displayed on an entire region of the user interface 220.

Here, one of a front camera or a rear camera of the user terminal 210 may be used as the camera which takes the image displayed on the viewfinder object 221.

As such, the control unit may display the photographing object 222 for controlling an operation of the camera on the user interface 220 provided in the display unit 211 of the user terminal 210. Specifically, the control unit may select any one of corners of the user interface 220 based on orientation information obtained from a gravity sensor (not illustrated) in the user terminal 210, thereby making it possible to display the photographing object 222 adjacent to the selected corner.

Below, the corners of the user interface 220 may mean a region including edges of the user interface 220. Accordingly, that the photographing object 222 is displayed around any one of corners of the user interface 220 may mean that the photographing object 222 is displayed to be close to any one corner of the whole region of the user interface 220.

For example, as illustrated in FIG. 2A, when the user terminal 210 is used in portrait orientation, the gravity sensor provided in the user terminal 210 may sense the orientation of the user terminal 210 and may generate orientation information indicating that the user terminal 210 is placed in the portrait orientation. The control unit may receive the orientation information, indicating that the user terminal 210 is placed in the portrait orientation, from the gravity sensor and may select one (a corner which is appropriately touched by a thumb or index finger of the user), placed at the upper right in the portrait orientation, from among the corners of the user interface 220 based on the orientation information, thereby making it possible to display the photographing object 222 around the upper right corner 230 in the portrait orientation.

In other embodiment, as illustrated in FIG. 2B, when the user terminal 210 is used in landscape orientation, the gravity sensor of the user terminal 210 may sense the orientation of the user terminal 210 and may generate orientation information indicating that the user terminal 210 is placed in the landscape orientation. The control unit may receive the orientation information, indicating that the user terminal 210 is placed in the landscape orientation, from the gravity sensor and may select one (a corner which is appropriately touched by a thumb or index finger of the user), placed at the upper right in the landscape orientation, from among the corners of the user interface 220 based on the orientation information, thereby making it possible to display the photographing object 222 around the upper right corner 240 in the landscape orientation.

Below, since the corners of the user interface 220 mean the corners of the display unit 211 including the user interface 220, that the photographing object 222 is displayed around any one of corners of the user interface 220 may mean that the photographing object 222 is displayed around any one of the corners of the display unit 211.

In addition, when the viewfinder object 221 is displayed in the entire region of the user interface 220, that the photographing object 222 is displayed around any one of the corners of the user interface 220 may mean that the photographing object 222 is displayed around any one of the corners of the viewfinder object 221.

As such, the control unit according to an embodiment of the inventive concept may select any one of the corners of the user interface 220 based on the orientation information obtained from a gravity sensor (not illustrated) provided in the user terminal 210 and may display the photographing object 222 around the selected corner, thereby making it possible to display a photographing object 222 in the light of orientation in which a user uses the user terminal 210. Accordingly, convenience of the user which uses the photographing object 222 displayed on the user interface 220 may be improved.

In FIG. 2, the photographing object 222 for improving convenience of a right-handed user may be illustrated as being displayed. However, the scope and spirit of the inventive concept may not be limited thereto. For example, the photographing object 222 for improving convenience of a left-handed user may be displayed so as to be symmetrical to FIG. 2.

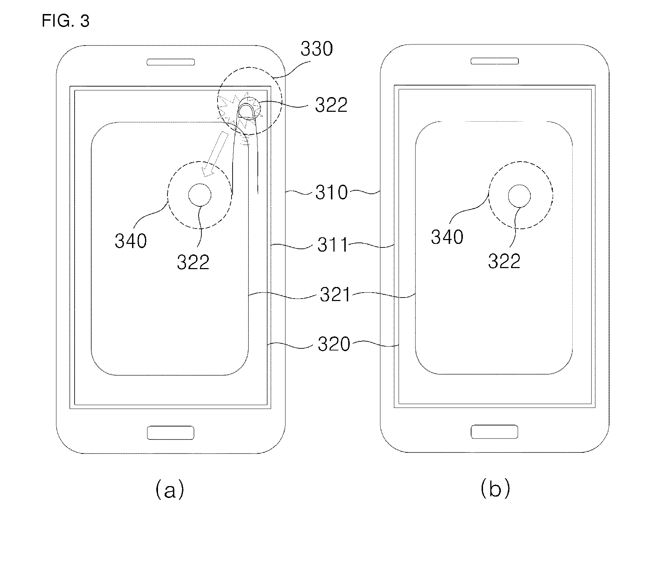

In addition, the control unit 210 may display the photographing object 222 on the user interface 220 based on information related to a position when the photographing object 222 is previously displayed, as well as the orientation information of the user terminal 210. In this case, after the photographing object 222 is displayed on the user interface 220, the control unit may store and maintain the information related to the position in which the photographing object 222 is displayed, thereby making it possible to use corresponding information when the photographing object 222 is displayed later. A detailed description may be given with respect to FIG. 3.

FIG. 3 is a diagram illustrating a user interface for displaying a photographing object according to other embodiment of the inventive concept.

Referring to FIG. 3, a control unit (not illustrated) included in a user terminal 310 may provide a user interface 320 to a display unit 311 in the user terminal 310. In this case, the user interface 320 may include a viewfinder object 321 displaying an image which a camera (not illustrated) included in the user terminal 310 takes. In FIG. 3, the viewfinder object 321 may be displayed on a portion of the user interface 320. However, the scope and spirit of the inventive concept may not be limited thereto. The viewfinder object 321 may be displayed on the whole region of the user interface 320.

As such, the control unit may display the photographing object 322 for controlling an operation of the camera on the user interface 320 provided in the display unit 311 of the user terminal 310. Specifically, the control unit may store and maintain information related to a position when a photographing object 322 is previously displayed and may select any one of the corners of the user interface 320 based on the information, thereby making it possible to display the photographing object 322 around the selected corner.

For example, as illustrated in FIG. 3A, there is assumed that the photographing object 322 is displayed according to the following condition. First, the photographing object 322 may be displayed around one 330, placed at the upper right in portrait orientation, from among corners of the user interface 320; when a user position selection input such as a drag input is generated on the photographing object 322, a position of the photographing object 322 may be changed into an area 340 (hereinafter referred to as a "one-third area") (e.g., corresponding to one of three partitioned areas of the viewfinder object 321 from the corner 322) in a viewfinder object 321 adjacent to one, placed at the upper right in portrait orientation, from among the corners of the user interface 320. In this case, the control unit may store and maintain information of a position where the photographing object 322 is displayed around the one-third corner in the portrait orientation; when the photographing object 322 is currently displayed, the control unit may select the one-third area 340 in the portrait orientation based on the position information, thereby making it possible to display the photographing object 322 around the one-third area 340 in the portrait orientation.

As such, the control unit according to other embodiment of the inventive concept may select any one of comers of the user interface 320 based on information related to a position when a photographing object 322 is previously displayed, and may display the photographing object 322 around the selected corner, thereby making it possible to display a photographing object 322 in the light of orientation (previously used orientation) in which a user frequently uses the user terminal 310. Accordingly, convenience of the user using the photographing object 322 on the user interface 320 may be improved.

In FIG. 3, the photographing object 322 for improving convenience of a right-handed user may be illustrated as being displayed. However, the scope and spirit of the inventive concept may not be limited thereto. For example, the photographing object 322 for improving convenience of a left-handed user may be displayed so as to be symmetrical to FIG. 3.

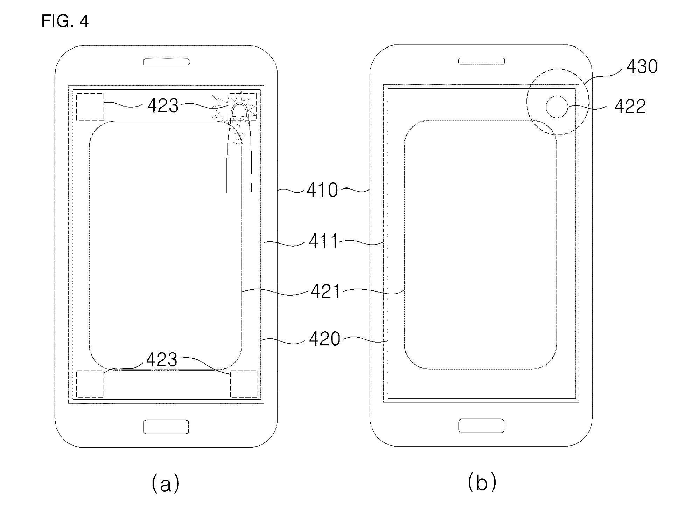

In addition, the control unit may display the photographing object 322 on the user interface 320 based on a position selection input of the user on the photographing object 322. A detailed description will be described with reference to FIG. 4.

FIG. 4 is a diagram illustrating a user interface where a photographing object is displayed, according to other embodiment of the inventive concept.

Referring to FIG. 4, a control unit (not illustrated) included in a user terminal 410 according to another embodiment of the inventive concept may provide a user interface 420 to a display unit 411 of a user terminal 410. In this case, the user interface 420 may include a viewfinder object 421 displaying an image which a camera (not illustrated) included in the user terminal 410 takes. In FIG. 4, the viewfinder object 421 may be displayed on a portion of the user interface 420. However, the scope and spirit of the inventive concept may not be limited thereto. The viewfinder object 421 may be displayed on the entire region of the user interface 420.

As such, the control unit may display the photographing object 422 for controlling an operation of the camera on the user interface 420 provided in the display unit 411 of the user terminal 410. Specifically, after displaying, on a user interface, a position selection input object 423 for receiving a position selection input of a user on the photographing object 422, the control unit may select any one of corners of the user interface 420 based on the position selection input of the user on the photographing object 422 generated from the position selection input object 423, thereby making it to display the photographing object 422 around the selected corner.

For example, as illustrated in FIG. 4A, if the position selection input object 423 on the user interface 420 is displayed and the position selection input of the user is then generated from the displayed position selection input object 423, the control unit may select the upper right corner 430 in portrait orientation, which is a region of the position selection input object 423 where the position selection input object 423 is generated, thereby making it possible to display the photographing object 422 around the selected upper right corner 430 in the portrait orientation as illustrated in FIG. 4B.

As described above, when displaying a photographing object 422 on the user interface, the control unit may adaptively determine the position of the user interface 420, in which the photographing object 422 is displayed, by using orientation information obtained by a gravity sensor included in the user terminal 410, information related to a position when a photographing object 422 is previously displayed, or information related to a position selection input of the user on the photographing object 422. Accordingly, it may be possible to improve convenience of the user using the photographing object 422.

In FIG. 4, the photographing object 422 for improving convenience of a right-handed user may be illustrated as being displayed. However, the scope and spirit of the inventive concept may not be limited thereto. For example, the photographing object 422 for improving convenience of a left-handed user may be displayed so as to be symmetrical to FIG. 4.

In addition, the control unit may change a position of a photographing object 422 displayed on the user interface 420. For example, the control unit may change the position of the displayed photographing object 422 based on a position change input of the user. A detailed description may be given below.

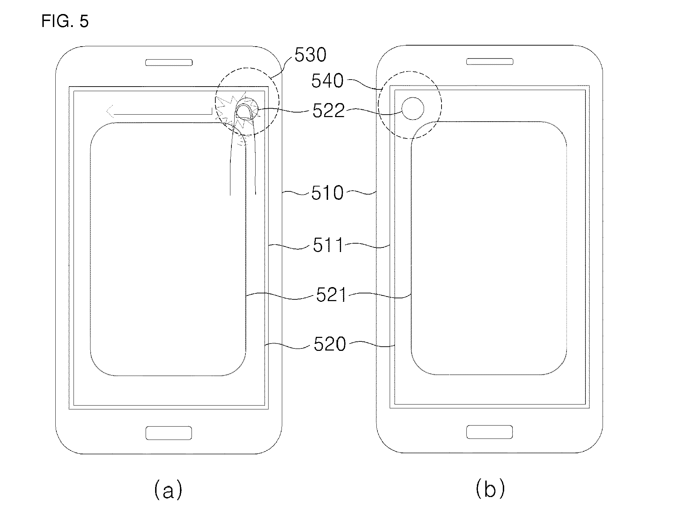

FIG. 5 is a diagram illustrating a user interface where a position of a displayed photographing object is changed, according to an embodiment of the inventive concept.

Referring to FIG. 5, a control unit (not illustrated) included in a user terminal 510 according to an embodiment of the inventive concept may provide a user interface 520, including a viewfinder object 521 displaying an image which a camera (not illustrated) included in the user terminal 210 takes, to a display unit 511 of the user terminal 510.

In addition, as described with reference to FIGS. 2 to 4, the control unit may display a photographing object 522 for controlling an operation of a camera around any one of corners of a user interface 520 provided in a display unit 511 of the user terminal 510.

In this case, the control unit may change a position of a photographing object which already displayed on the user interface 520. Specifically, the control unit may receive a position change input of the user for changing the position of the displayed photographing object 522 and may change the position of the displayed photographing object 522 based on the position change input of the user. For example, the control unit may receive a drag input of the user for changing the position of the displayed photographing object 522 and may change the position of the displayed photographing object 522 in response to the drag input.

More specifically, for example, as illustrated in FIG. 5A, if a drag input is generated after the user's touch input is held above a predetermined time at the photographing object 522 displayed around one 530, placed at the upper right in portrait orientation, from among corners of the user interface 520, the control unit may move the photographing object 522 along the drag input of the user, thereby making it possible to change a position of the displayed photographing object 522 into an area adjacent to the upper left corner 540 in portrait orientation as illustrated in FIG. 5B. Also, the position of the photographing object 522 may be changed the user terminal is used in landscape orientation (not illustrated).

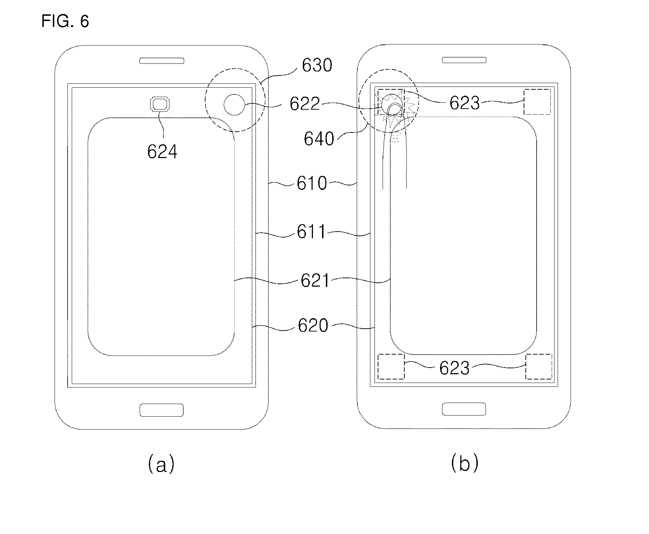

In addition, in response to the drag-input of the user on the displayed photographing object 522, the control unit may not change the position of the displayed photographing object 522, but may use a position change input object for receiving the position change input of the user used to change the position of the displayed photographing object 522, thereby making it possible to change the position of the displayed photographing object 522. A detailed description may be given with respect to FIG. 6.

FIG. 6 is a diagram illustrating a user interface where a position of a displayed photographing object is changed, according to an embodiment of the inventive concept.

Referring to FIG. 6, a control unit (not illustrated) included in a user terminal 610 according to other embodiment of the inventive concept may provide a display unit 611 of the user terminal 610 with a user interface 620 including a viewfinder object 621 for displaying an image which a camera (not illustrated) included in the user terminal 610 takes.

In addition, as described with reference to FIGS. 2 to 4, a photographing object 622 for controlling an operation of a camera may be displayed around any one of corners of a user interface 620 provided in a display unit 611.

In this case, a control unit may change a position of a photographing object 622 previously displayed on the user interface 620. Specifically, the control unit may receive a position change input of the user used to change the position of the displayed photographing object 622 and may change the position of the displayed photographing object 622 based on the position change input of the user. For example, after displaying, on the user interface 620, the position change input object 623 for receiving the position change input of the user used to change the position of the displayed photographing object, the control unit may receive the position selection input of the user on a position selection input object 623, thereby making it possible to change the position of the displayed photographing object 622.

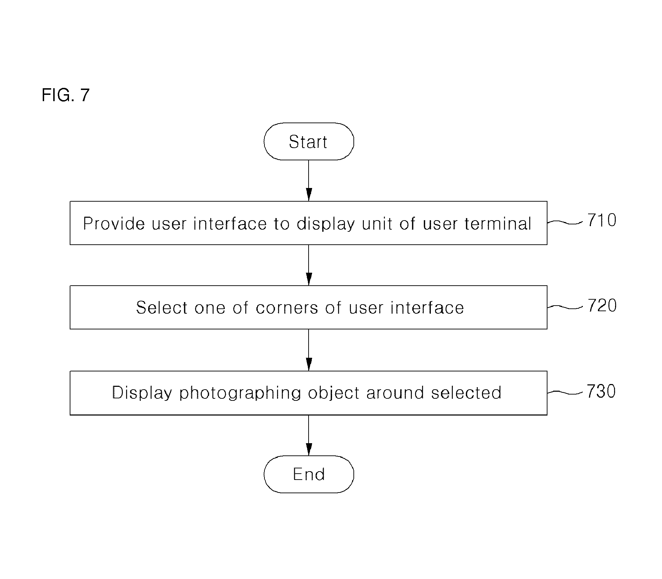

More specifically, for example, as illustrated in FIG. 7A, the photographing object 622 may be displayed at a surrounding area of one 630, placed at the upper right in portrait orientation, from among corners of the user interface 620. When a touch-input of the user is generated at a setting object 624 which loads the position change input object 623, the control unit may display the position change input object 623 on the user interface 620 as illustrated in FIG. 6B. Furthermore, when the position change input of the user is generated at the position change input object 623 corresponding to the upper left corner 640 in the portrait orientation, the control unit may change a position of the displayed photographing object 622 into a surrounding area of an upper left corner 640 in the portrait orientation, based on the position change input of the user.

FIG. 7 is a flow chart illustrating a user interface providing method according to an embodiment of the inventive concept.

Referring to FIG. 7, in step 710, a control unit may provide a user interface including a viewfinder object, displaying an image which a camera takes, to a display unit of the user terminal.

In step 720, the control unit may select one of corners of the user interface based on orientation information, of the user terminal, obtained from a gravity sensor in the user terminal.

In this case, the control unit may select one of the corners of the user interface based on information related to a position when a photographing object is previously displayed.

In addition, the control unit may select one of corners of the user interface based on a position selection input of the user on the photographing object. In this case, the control unit may display the position selection input object for receiving the position selection input on the photographing object, on the user interface.

Accordingly, in step 730, the control unit may display the photographing object for controlling an operation of the camera at a surrounding area of the selected corner.

Although not illustrated in the drawings, the control unit may store and maintain information related to a position of the displayed photographing object after the photographing object is displayed, thereby making it possible to use information related to a position, in which a photographing object is currently displayed, when a photographing object is displayed later.

In addition, in response to the drag input of the user on the displayed photographing object, the control unit may change the position in which the photographing object is displayed.

In addition, the control unit may display, on the user interface, a position change input object for receiving the position change input of the user used to change a position of the displayed photographing object, thereby making it possible to change the position of the displayed photographing object based on the position change input of the user on the position change input object.

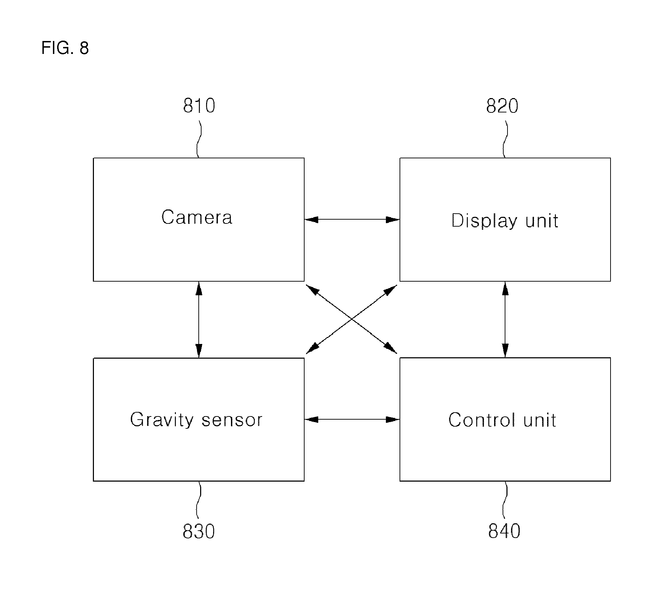

FIG. 8 is a block diagram illustrating a user terminal operating through a user interface according to an embodiment of the inventive concept.

Referring to FIG. 8, a user terminal according to an embodiment of the inventive concept may include a camera 810, a display unit 820, a gravity sensor 830, and a control unit 840.

In this case, the control unit 840 may provide the display unit 820 with the user interface including a viewfinder object displaying an image which a camera takes, may select one of corners of the user interface based on orientation information of the user terminal obtained from a gravity sensor 830, and may display a photographing object for controlling an shooting operation of the camera around the selected corner.

In this case, the control unit 840 may select one of corners of the user interface based on information related to a position when a photographing object is previously displayed.

In addition, the control unit 840 may select one of corners of the user interface based on a position selection input of the user on the photographing object. In this case, the control unit 840 may display the position selection input object for receiving the position selection input on the photographing object, on the user interface.

Furthermore, the user terminal may further include a memory which stores and retains information related to a position of the displayed photographing object after the photographing object is displayed. Accordingly, when a next photographing object is displayed, the control unit 840 may use information related to a currently displayed position of a photographing object stored at the memory.

In addition, the control unit 840 may change the position of the displayed photographing object in response to the drag input of the user on the photographing object displayed.

In addition, the control unit 840 may display a position change input object for receiving the position change input of the user used to change the position of the displayed photographing object on the user interface, thereby making it possible to change the position of the displayed photographing object based on the position change input of the user on the position change input object.

Embodiments of the inventive concepts provide a user interface providing method and a user terminal including the same, capable of selecting one of corners of a user interface based on orientation information of a user terminal obtained from a gravity sensor of the user terminal and displaying a photographing object around the selected corner, thereby improving user convenience.

In addition, embodiments of the inventive concept provide a user interface providing method and a user terminal including the same, capable of storing and maintaining information associated with a position at which a photographing object is displayed, thereby making it possible to select one of the comers of a user interface based on information related to a position of the time when a photographing object was previously displayed and display a photographing object around the selected corner.

In addition, embodiments of the inventive concept provide a user interface providing method and a user terminal including the same, capable of selecting any one of the corners of a user interface based on a position selection input of the user on the photographing object and displaying the photographing object around the selected corner.

In addition, embodiments of the inventive concept provide a user interface providing method and a user terminal including the same, capable of changing the position in which the photographing object is displayed, in response to a position change input of a user changing a position of a displayed photographing object.

Accordingly, embodiments of the inventive concepts may allow a user to adaptively select a position where a photographing object is displayed, in the light of user's hand size and appearance, a size of the user terminal, a position (lens position) of a camera in the user terminal, or the like.

Although being described with reference to specific examples and drawings, modifications, additions and substitutions on embodiments may be variously made according to the description by those of ordinary skill in the art. For example, the described techniques may be performed in an order different with that of the methods described, and/or components such as the described system, architecture, devices, circuit, and the like, may be connected or combined to be different from the above-described methods, or results may be appropriately achieved by other components or equivalents.

Therefore, other implementations, other embodiments and equivalent things of claims may be within the scope of the claims to be described later.
While the inventive concept has been described with reference to exemplary embodiments, it will be apparent to those skilled in the art that various changes and modifications may be made without departing from the spirit and scope of the inventive concept. Therefore, it should be understood that the above embodiments are not limiting, but illustrative.

## Claims

1. A user interface providing method in a user terminal including a camera, comprising:
providing a user interface including a viewfinder object displaying an image which the camera takes, to a display unit of the user terminal;
selecting one of corners of the user interface based on orientation information obtained from a gravity sensor included in the user terminal; and
displaying the photographing object for controlling a shooting operation of the camera around the selected corner.

2. The user interface providing method of claim 1, wherein the selecting comprises:
selecting one of the corners of the user interface based on information related to a position when a photographing object is previously displayed.

3. The user interface providing method of claim 1, wherein the displaying comprises:
storing and maintaining information related to a position of the displayed photographing object after the photographing object is displayed.

4. The user interface providing method of claim 1, wherein the selecting of one of corners of the user interface comprises:
selecting one of the corners of the user interface based on a position selection input of a user on the photographing object.

5. The user interface providing method of claim 4, wherein the selecting of one of corners of the user interface further comprises:
displaying a position selection input object for receiving a position selection input of the user on the photographing object, on the user interface.

6. The user interface providing method of claim 1, wherein the displaying comprises:
changing a position of the displayed photographing object in response to receive a position change input of a user for changing the position of the displayed photographing object.

7. The user interface providing method of claim 6, wherein the changing comprises at least one of:
receiving a position selection input of the user on a displayed position selection input object on the user interface, or
receiving a drag input of the user for changing the position of the displayed photographing object.

8. A user interface providing method in a user terminal including a camera, comprising:
providing a user interface including a viewfinder object displaying an image which the camera takes, to a display unit of the user terminal;
displaying a photographing object for controlling a photographing operation of the camera through the user interface;
receiving a position change input of a user for changing a position of the displayed photographing object; and
changing the position of the displayed photographing object based on the position change input of the user.

9. The user interface providing method of claim 8, further comprising:
determining the position of the photographing object based on information related to a position when the photographing object is previously displayed.

10. The user interface providing method of claim 8, wherein the receiving comprises at least one of:
receiving a position selection input of the user on a displayed position selection input object, or
receiving a drag input of a user for changing the position of the displayed photographing object.
